# EUROPÄISCHE PATENTANMELDUNG

(11) **EP 1 239 571 A1**
(43) Veröffentlichungstag der Anmeldung: **11.09.2002**
(21) Anmeldenummer: 02004167.9
(22) Anmeldetag: 26.02.2002
(51) Int. Cl.: H02K 21/14

(54) **Transversalflussantrieb**

(30) Priorität: 01.03.2001 DE 10109774
(71) Anmelder: DEERE & COMPANY, Moline, Illinois 61265-8098 (US)
(72) Erfinder: Weiss, Heinz, 64625 Bensheim (DE)
(74) Vertreter: Lau-Loskill, Philipp, Dipl.-Phys.

(57) **Zusammenfassung**

Es wird ein Transversalflussantrieb mit wenigstens einem ersten Bauteil (24) und einem zweiten Bauteil (10) beschrieben, die um eine Drehachse (18) relativ zueinander verdrehbar sind und wenigstens eine Phase (Strang) einer Transversalflussmaschine enthalten, welche in Umfangsrichtung zueinander beabstandete Magnetkreiselemente aufweist. Jedes Magnetkreiselement weist wenigstens ein auf dem ersten Bauteil angeordnetes im wesentlichen U-förmiges Ankerelement (44, 46), welches eine sich in Umfangsrichtung erstreckende Erregerwicklung (48, 50) einschließt, und ein auf dem zweiten Bauteil (10) angeordnetes wenigstens einen Permanentmagneten enthaltendes Magnetpolelement (52, 54) auf.

Um unterschiedlichen Drehmomentanforderungen Rechnung tragen zu können, wird vorgeschlagen, dass wenigstens einige der Magnetpolelemente (52, 54) und/oder wenigstens einige der Ankerelemente (44, 46) gemeinsam mit der zugehörigen Erregerwicklung (48, 50) axial verschiebbar auf dem zugehörigen Bauteil (10, 24) angeordnet sind. Hierdurch lässt sich eine mechanische Feldschwächung erreichen.

## Beschreibung

Die Erfindung betrifft einen Antrieb mit Transversalflussmotor mit wenigstens einem ersten Bauteil und einem zweiten Bauteil, die um eine Drehachse relativ zueinander verdrehbar sind und wenigstens eine Phase einer Transversalflussmaschine enthalten. Jede Phase besitzt Magnetkreiselemente, die in Umfangsrichtung zueinander beabstandet sind. Jedes Magnetkreiselement weist wenigstens ein auf dem ersten Bauteil angeordnetes im wesentlichen U-förmiges Ankerelement, welches eine sich in Umfangsrichtung erstreckende Erregerwicklung einschließt, sowie ein auf dem zweiten Bauteil angeordnetes wenigstens einen Permanentmagneten enthaltendes Magnetpolelement auf.

Eine derartige elektrische Maschine, bei der das Transversalflusskonzept Anwendung findet und die zwei Phasen enthält, geht beispielsweise aus der WO 92/10023 hervor. Dort ist in einem Statorgehäuse der Maschine ein Rotor um eine Welle drehbar gelagert. Der Rotor besitzt eine zentrale Scheibe, an derem radial äußeren Umfang zu jeder axialen Seite eine Polstruktur angeordnet ist, welche in Umfangsrichtung angeordnete Reihen von Permanentmagneten aufweist, die wechselweise polarisiert sind. Den Polstrukturen steht jeweils, getrennt durch einen Luftspalt, ein Stator gegenüber, der aus einem radial außenliegenden Außenstator und einem radial innenliegenden Innenstator besteht. Der Außenstator enthält U-förmig ausgebildete Ankerelemente, deren offene Schenkel den Permanentmagneten der Polstrukturen gegenüber stehen. Innerhalb der Schenkel befindet sich eine in Umfangsrichtung des Rotors verlaufende Ringwicklung. Der Innenstator enthält Jochelemente, die den magnetischen Rückschluss für die Permanentmagnete bilden.

Weitere Beispiele für Transversalflussmaschinen mit Permanenterregung und einer oder mehreren Phasen, die auch Stränge genannt werden, gehen aus der DE-A-35 36 538 hervor. Dort wird auch angegeben, dass sich einzelne Segmente oder Ankerelementbereiche durch ihre zugehörigen Wechselrichter abschalten lassen. Bei Wicklungsschäden können Teilsegmente radial ausgebaut werden, ohne die ganze Maschine zu demontieren, wobei die restlichen Segmente betriebsbereit bleiben.

Im Vergleich zu Longitudinalflussmaschinen gleicher Baugröße entwickeln Transversalflussmaschinen ein erheblich höheres Drehmoment. Daher eignen sie sich besonders für Direktantriebe im Bereich der Fahrzeugtechnik und bringen den Vorteil mit sich, dass kostspielige und den Wirkungsgrad herabsetzende mechanische Getriebe entfallen können. Die Drehmomentanforderungen von Fahrzeugantrieben können jedoch je nach Einsatzart sehr unterschiedlich sein. So wird von einem Ackerschlepper für den Einsatz beim Pflügen bei relativ langsamer Fahrt und geringen Raddrehzahlen ein besonders hohes Drehmoment verlangt, während für den Transportbetrieb bei relativ hohen Fahrgeschwindigkeiten und hoher Raddrehzahl erheblich geringere Drehmomente gefordert werden. Diesen unterschiedlichen Drehmomentanforderungen trägt die Auslegung einer konventionellen Transversalflussmaschine nicht Rechnung.

Die der Erfindung zugrunde liegende Aufgabe wird darin gesehen, einen Transversalflussantrieb der eingangs genannten Art anzugeben, der sich an unterschiedliche Drehmomentanforderungen anpassen lässt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Der erfindungsgemäße Transversalflussantrieb enthält wenigstens ein erstes Bauteil und ein zweiten Bauteil, die um eine Drehachse relativ zueinander verdrehbar sind. Sie weist eine Transversalflussmaschine mit wenigstens einer Phase, auch Strang genannt, auf. Jede Phase umfasst in Umfangsrichtung, insbesondere äquidistant zueinander beabstandete Magnetkreiselemente, wobei jedes Magnetkreiselement wenigstens ein auf dem ersten Bauteil angeordnetes im wesentlichen U-förmiges Ankerelement und ein auf dem zweiten Bauteil angeordnetes Magnetpolelement aufweist. Die Ankerelemente schließen wenigstens eine sich in Umfangsrichtung erstreckende Erregerwicklung ein. Jedes Magnetpolelement umfasst wenigstens einen Permanentmagneten, wobei sich die Polarität jeweils in Umfangsrichtung benachbarter Permanentmagnete abwechselt und zwischen jeweils zwei in Umfangsrichtung benachbarten Permanentmagneten vorzugsweise ein Weicheisenlamellenpaket angeordnet ist. Der Transversalflussantrieb zeichnet sich erfindungsgemäß dadurch aus, dass sich wenigstens einige der Magnetpolelemente aus ihrer Grundstellung, bei der ein maximal möglicher Fluss in den Magnetkreiselementen gewährleistet ist, axial verschieben lassen.

Durch die Verschiebung wird das Magnetfeld bzw. der magnetische Fluss in den betroffenen Magnetkreiselementen abgeschaltet oder geschwächt, so dass der Gesamtfluss der Maschine geschwächt wird (mechanische Feldschwächung). Mit anderen Worten, durch eine axiale Verschiebung der Magnetpolelemente treten die Ankerelemente, welche die Erregerwicklung einschließen, räumlich aus dem Einflussbereich der Magnetpolelemente heraus, so dass die betroffenen Magnetkreiselemente wirkungslos werden. Die zugehörigen Magnetpolelemente drehen dann lediglich mit und lösen keine magnetischen oder elektrischen Rückwirkungen aus. Bei nur teilweiser axialer Verschiebung der Magnetpolelemente ist die Feldschwächung weniger stark ausgebildet.

Ergänzend oder alternativ schlägt die Erfindung vor, wenigstens einige der Ankerelemente gemeinsam mit der zugehörigen Erregerwicklung axial verschiebbar auf dem zugehörigen Bauteil anzuordnen. Durch diese Verschiebung stellt sich eine entsprechende Wirkung ein, wie sie anhand der Verschiebung der Magnetpolelemente beschrieben wurde.

Es ist von besonderem Vorteil, wenn das erste Bauteil, das die Ankerelemente und Erregerwicklung trägt, ein sich nicht drehender Stator ist. Das zweite Bauteil, das die Magnetpolelemente trägt, ist hingegen ein sich am Stator drehbar abstützender Rotor. Durch diese Ausgestaltung sind Schleifringe zur elektrischen Versorgung der Erregerwicklung entbehrlich, und für die Kühlung der Erregerwicklung sind keine Kühlmittel-Drehdurchführungen erforderlich.

Vorzugsweise sind die Magnetpolelemente jeder Phase jeweils auf einem Polrad angeordnet, welches als Ringelement ausgebildet sein kann und drehfest mit einem Rotormantel des Transversalflussantriebs verbunden ist. Die drehfeste Verbindung lässt sich beispielsweise durch eine Verzahnung zwischen dem Polrad und dem Rotormantel ausbilden, wobei die Verzahnung vorzugsweise in radialer Richtung verläuft, so dass sich zur Montage das Polrad in den Rotormantel axial einschieben und gegebenenfalls durch Sicherungselemente wenigstens in einer der beiden axialen Richtungen fixieren lässt.

Durch eine bevorzugte Weiterbildung der Erfindung wird vorgeschlagen, eine Transversalflussmaschine mit wenigstens zwei Phasen zu verwenden. Dabei ist das Polrad einer ersten Phase axial nicht verschiebbar und beispielsweise zwischen axial wirkenden Sicherungselementen gegenüber dem Rotormantel festgelegt. Wenigstens das Polrad einer zweiten Phase ist hingegen axial derart verschiebbar, dass sich magnetische Kreise mit den zugehörigen Ankerelementen ganz oder teilweise unterbrechen lassen.

Bei Verwendung mehrerer Phasen ist es von Vorteil, die Magnetkreiselemente wenigstens zweier Phasen nicht in gleicher Umfangslage, sondern in Umfangsrichtungen versetzt zueinander anzuordnen. Beispielsweise ist die Anordnung der Ankerelemente zweier Phasen zueinander in Umfangsrichtung versetzt, während die Magnetpolelemente der beiden Phasen jeweils miteinander die gleiche Umfangslage einnehmen. Umgekehrt ist es auch möglich, die Magnetpolelemente zweier Phasen zueinander zu versetzen. Werden lediglich zwei Phasen verwendet, ist es von Vorteil, wenn der Versatz in etwa dem halben Umfangsabstand der jeweiligen Elemente entspricht. Damit ergibt sich eine zweiphasige oder mehrphasige Anordnung bei welcher der Kraftverlauf der Phasen zeitlich verschoben ist, so dass die Maschine problemloser anläuft und runder läuft.

Um einen einfachen Aufbau und geringe Wicklungsverluste zu realisieren, ist es zweckmäßig, die in Umfangsrichtung angeordneten Ankerelemente jeder Phase jeweils durch eine einzige durchgehende Erregerwicklung induktiv zu koppeln. Es handelt sich beispielsweise um jeweils eine konzentrische Ringspule.

Eine besonders bevorzugte Weiterbildung der Erfindung ist in einer Verschiebevorrichtung zu sehen, die eine Verschiebung während des Betriebs des Transversalflussantriebs ermöglicht. Es kann somit während des Betriebs auf unterschiedliche Drehmomentanforderungen reagiert werden, ohne den Antrieb stillzusetzen, um Eingriffe an dem Antriebssystem vorzunehmen. Diese Weiterbildung ist für Antriebssysteme von Arbeitsfahrzeugen besonders vorteilhaft, weil sie eine Anpassung an sich wechselnde Drehmomentanforderungen, zum Beispiel beim Wechsel zwischen Arbeitseinsatz und Transportbetrieb, ohne Betriebsunterbrechung ermöglicht.

Hierbei ist es von Vorteil, eine Steuereinrichtung vorzusehen, welche die Drehzahl des Antriebs erfasst und bei Über- oder Unterschreiten wenigstens eines vorgebbaren Drehzahlgrenzwertes eine automatische Verschiebung vornimmt. Zur Auslösung einer Verschiebung im Sinne einer Flusserhöhung bzw. für eine Verschiebung im Sinne einer Flusserniedrigung lassen sich unterschiedliche Drehzahlgrenzwerte vorgeben. Für einen stabilen Betrieb ist es zweckmäßig die Umschaltung im Sinne einer Flusserniedrigung bei einem tieferen Drehzahlgrenzwert vorzunehmen als die Umschaltung im Sinne einer Flusserhöhung.

Gemäß einer bevorzugten Weiterbildung der Erfindung ist eine hydraulische Verschiebevorrichtung vorgesehen. Diese ist zweckmäßigerweise derart ausgebildet, dass das Statorgehäuse wenigstens eine Hydraulikkammer mit einem darin axial verschiebbaren Hydraulikkolben enthält und dass der Hydraulikkolben mit den verschiebbaren Magnetkreiselementen, insbesondere mit verschiebbaren Magnetpolelementen, z. B. mit wenigstens einem verschiebbaren Polrad, verbunden ist. Die wesentlichen Hydraulikkomponenten befinden sich damit im Statorgehäuse, so dass Hydraulikdrehdurchführungen vermieden werden und das Hydrauliksystem nicht den Drehbeanspruchungen eines Rotors ausgesetzt ist.

Vorzugsweise lastet auf dem Kolben die Kraft wenigstens einer Rückstellfeder, die den Kolben in seine Ausgangsstellung drückt, in welchem die magnetischen Kreise, welche die verschiebbaren Elemente enthalten, geschlossen sind. Der Kolben ist des weiteren durch Hydraulikdruck-Beaufschlagung ganz oder teilweise in eine Ausrückstellung verschiebbar, in der eine Magnetfeldschwächung eintritt.

Es hat sich als besonders vorteilhaft herausgestellt, den erfindungsgemäßen Transversalflussantrieb in eine Radnabe, insbesondere die Radnabe eines Arbeitsfahrzeugs zu integrieren. Das sich drehende Bauteil treibt somit ein Rad, insbesondere ein Fahrzeugrad, an. Es ergibt sich somit ein kompaktes Bauelement, welches die Antriebsfunktion und die Radfunktion in sich vereinigt und als komplettes Modul vielseitig verwendbar ist. Diese Bauelemente eignen sich in besonders vorteilhafter Weise zur Ausbildung eines Fahrzeugs mit elektrischem Einzelradantrieb, dessen Vorzüge u. a. in der DE-A-197 23 776 und der EP-A-0 864 457 angesprochen wurden.

Vorzugsweise ist das sich drehende Bauteil als Felgenbett für einen Fahrzeugreifen ausgebildet. Dabei ist das Felgenbett zweckmäßigerweise im wesentlichen zylindrisch ausgebildet und durch je ein Felgenhorn an seinen axialen Seite begrenzt, wobei wenigstens eines der Felgenhörner durch Schraubverbindung befestigbar ist und sich zur Montage des Reifens abnehmen lässt. Diese Ausbildung erleichtert die Montage des Reifens erheblich.

Es ist auch zweckmäßig, das Statorteil mit einer Fahrzeugachse zu verbinden. Bei der Fahrzeugachse kann es sich um unterschiedliche Bauformen handeln, z. B. um eine Starrachse, um eine Lenkachse und/oder um eine gefederte oder ungefederte Achse.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Teilschnittdarstellung einer Fahrzeugradnabe, in die ein erfindungsgemäßer Transversalflussantrieb mit zwei Phasen integriert ist und bei der sich alle Magnetkreiselemente in eingerückter Stellung befinden,
- Fig. 2: eine Ansicht gemäß Fig. 1, bei der sich Magnetkreiselemente einer Phase in ausgerückter Stellung befinden und
- Fig. 3: eine quer zur Rotationsachse verlaufende Schnittansicht des Transversalflussantriebs der Fig. 1.

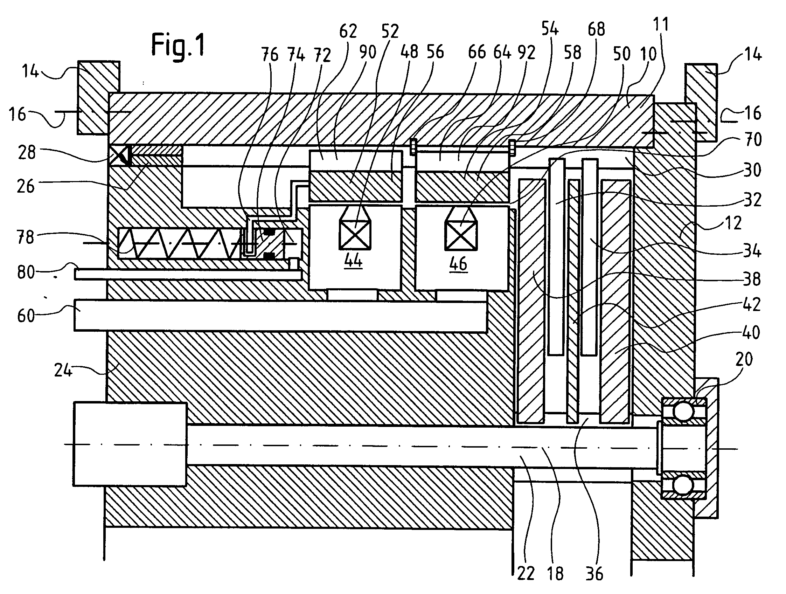

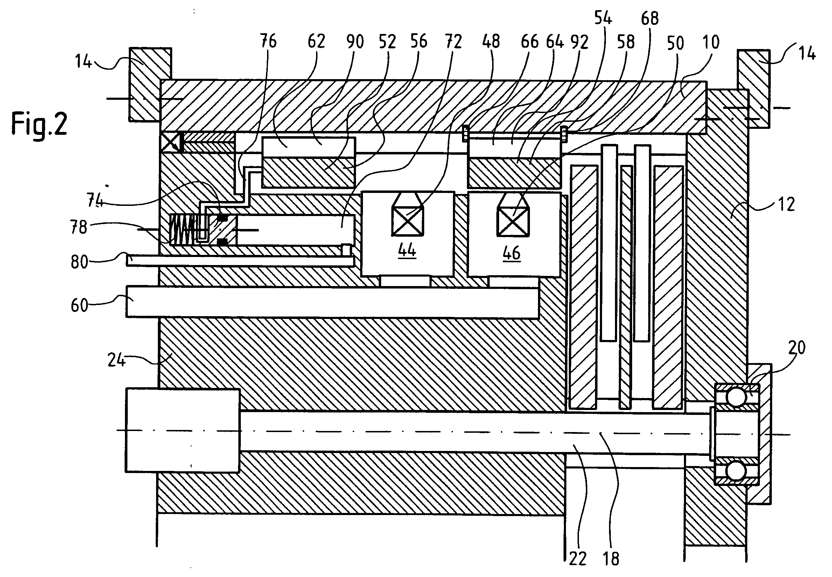

Aus den Figuren 1 und 2 geht die obere Hälfte der Axialschnittdarstellung einer im wesentlichen rotationssymmetrischen ausgebildeten Radnabe 10 hervor, welche ein Felgenbett 11 und eine an diesem befestigte Radscheibe 12 enthält. Die als Rotor oder Rotormantel ausgebildete Radnabe 10 ist aus Aluminium gefertigt. Sie dient der Aufnahme eines nicht gezeigten Fahrzeugreifens. Die Radnabe 10 ist auf ihren beiden axialen Seiten durch je ein radial vorstehendes Felgenhorn 14 begrenzt. Jedes Felgenhorn 14 ist durch auf dem Umfang verteilte Schrauben 16 an der Radnabe 10 befestigbar. Zur Montage und Demontage eines Reifens lässt sich wenigstens eines der Felgenhörner 14 abschrauben, so dass sich der Reifen auf das Felgenbett 11 schieben lässt, ohne ihn über das Felgenhorn 14 hebeln zu müssen.

Die um die Drehachse 18 verdrehbare Radnabe 10 stützt sich mit ihrer rechts angeordneten Radscheiben 12 über ein als Gleitlager oder Rollenlager ausgebildetes Festlager 20 auf einer nicht drehbaren Radachse 22 ab, die an einer nicht näher dargestellten Fahrzeugachse befestigbar ist. Auf der Radachse 22 ist drehfest ein aus Aluminium bestehender Stator 24 befestigt. Zur drehfesten Verbindung können beispielsweise nicht näher dargestellte Verkeilungen dienen.

Im gemäß den Figuren 1 und 2 linken Bereich stützt sich die Radnabe 10 über ein als Gleitlager oder Rollenlager ausgebildetes Loslager 26, welches einen axialen Ausgleich zulässt, am Stator 24 ab. Eine Dichtung 28 dichtet den Bereich zwischen Stator 24 und Rotor 10 nach außen hin ab.

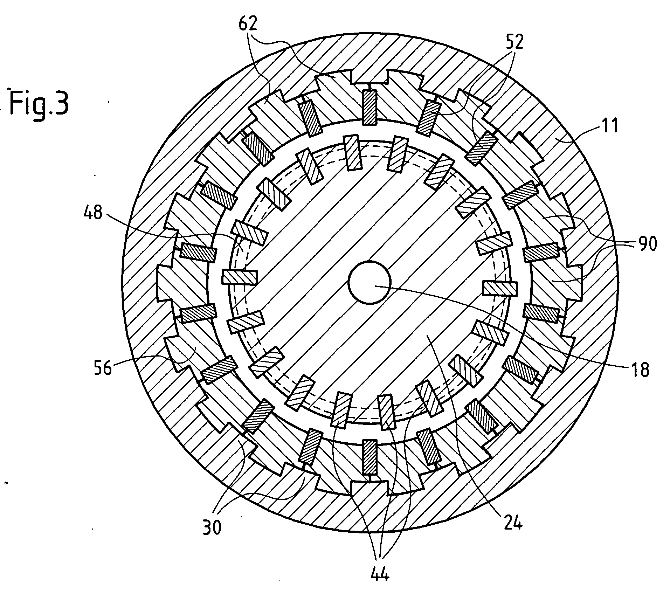

Die radial innere Fläche der Radnabe 10 weist eine sich im wesentlichen über die ganze axiale Länge erstreckende und axial ausgerichtete Verzahnungsstruktur 30 auf, in die entsprechende Verzahnungen zweier Bremsscheiben 32, 34 eingreifen (Fig. 3), so dass die Bremsscheiben 32, 34 drehfest mit der Radnabe 10 verbunden sind. Die Radachse 22 enthält auf einem gemäß der Figuren 1 und 2 rechts liegenden Abschnitt eine nach außen weisende axiale Verzahnungsstruktur 36, in die entsprechende Verzahnungen zweier Druckplatten 38, 40 und einer Zwischenscheibe 42 drehfest eingreifen. Die Bauteile 32, 34, 38, 40 und 42 gehören zu einem in die Radnabe 10 integrierten Scheibenbremssystems, bei dessen Ausbildung und Auslegung sich der Fachmann an üblichen im Traktorbau verwendeten Hauptbremssystemen orientieren kann.

In die Radnabe 10 ist ein Transversalmotor mit zwei Phasen integriert. Jede Phase besteht im wesentlichen aus auf einem Umfangskreis in einer Reihe in gleichmäßigem Abstand zueinander angeordneten U-förmigen Ankerelementen 44, 46, die eine Ringspule 48, 50 einschließen, und einer gleichen Anzahl von Magnetpolelementen 52, 54, die in einer Reihe in gleichmäßigen Abstand zueinander auf einem Polrad 56, 58 angeordnet sind.

Die als U-Joch ausgebildeten Ankerelemente 44, 46 sind in den Stator 24 eingebettet und bestehen aus geschichteten Weicheisenblechen. Die als Ankerspulen ausgebildeten Ringspulen 48, 50 werden mit einer konventionellen Kühlung betrieben. Es ist ein im Stator 24 ausgebildeter Kühlmittelkanal 60, welcher der Kühlmittelversorgung dient, schematisch dargestellt.

Die auf den Polrädern 56, 58 angeordneten Magnetpolelemente 52, 54 enthalten Permanentmagnete und zugehörige Rückschlusselemente 90, 92 aus Weicheisen, die sich in Umfangsrichtung abwechseln und zu einem stabilen Bauteil, beispielsweise durch Verkleben, zusammengefügt sind. Jeweils zwei in Umfangsrichtung benachbarte Permanentmagnete sind auf übliche Weise wechselseitig polarisiert. Die beiden Polräder 56, 58 enthalten auf ihrem Umfang axial ausgerichtete Verzahnungen 62, 64, die in die Verzahnungsstruktur 30 der Radnabe 10 eingreifen, so dass die Polräder 56, 58 mit der Radnabe 10 drehfest verbunden sind. Die Verzahnungen 62, 64 sind vorzugsweise auf den Rückschlusselementen 90, 92 ausgebildet, um die Permanentmagnete weitgehend frei von Kräften zu halten.

Das gemäß der Figuren 1 und 2 rechte Polrad 58 wird durch einen linken und einen rechten Sicherungsring 66, 68, die in zugehörige Nuten der Radnabe 10 eingesetzt sind, an einer axialen Verschiebung gehindert. Die Magnetpolelemente 54 des rechten Polrades 58 stehen bei allen Betriebsbedingungen des Transversalflussantriebs den Ankerelementen 46 der rechten Phase gegenüber, wobei zwischen den Magnetpolelementen 54 und den Ankerelementen 46 ein ringförmiger Luftspalt 70 von etwa 1 mm ausgebildet ist.

Die offenen Schenkel der Ankerelemente 44 stehen den Permanentmagneten der zugehörigen Magnetpolelementen 52 gegenüber. Sie bilden gemeinsam sogenannte Magnetkreiselemente, in denen sich ein magnetischer Fluss ausbildet, der von dem Wechselstrom in der Ankerwicklung 48, 50 beeinflusst wird.

Anders als das axial nicht verschiebbare rechte Polrad 58 lässt sich das linke Polrad 56 durch eine Verschiebevorrichtung aus der in Fig. 1 gezeigten Stellung, in der seine Magnetpolelemente 52 den Ankerelementen 44 der linken Phase gegenüberstehen, axial nach links in die in Fig. 2 dargestellte Stellung verschieben, in der sich seine Magnetpolelemente 52 nicht mehr im Einflussbereich der Ankerelemente 44 der linken Phase befinden. Bei der Verschiebung greift die Verzahnung 62 des linken Polrades 56 weiterhin in die Verzahnungsstruktur 30 der Radnabe 10 ein, so dass die drehfeste Verbindung zwischen der Radnabe 10 und dem linken Polrad 56 aufrechterhalten bleibt.

Ist das linke Polrad 56 nach links verschoben und befinden sich seine Magnetpolelemente 52 außerhalb des Einflussbereichs der Ankerelemente 44, so bildet sich kein magnetischer Fluss zwischen den Ankerelementen 44 und den Magnetpolelementen 54 aus. In dieser Stellung besteht zwischen den Magnetpolelementen 56 und den Ankerelementen 44 keine magnetische Wechselwirkung. Das linke Polrad 56 wird lediglich mechanisch mit der Radnabe 10 mitgedreht.

Die Verschiebevorrichtung enthält wenigstens eine Hydraulikkammer 72, die einen Hydraulikkolben 74 axial verschiebbar aufnimmt. Es kann sich bei der Hydraulikkammer 72 auch um eine konzentrisch zur Drehachse 18 angeordnete Ringkammer oder um mehrere in Umfangsrichtung angeordnete Einzelkammern handeln. Der Hydraulikkolben 74 steht über ein lediglich schematisch dargestelltes Gestänge 76 mit dem linken Polrad 56 in Verbindung, so dass das linke Polrad 56 jeder axialen Bewegung des Hydraulikkolbens 74 folgt. Der Hydraulikkolben 74 wird durch eine Druckfeder 78, die sich an der linken Stirnseite der Hydraulikkammer 72 abstützt nach rechts gedrückt. Die Hydraulikkammer 72 steht über eine Hydraulikleitung 80 mit einer nicht gezeigten hydraulischen Steuereinrichtung in Verbindung, die in Abhängigkeit von Steuersignalen die Hydraulikkammer 72 unter Druck setzt, so dass sich der Hydraulikkolben 74 und mit ihm das linke Polrad 56 nach links verschieben, wie es in Fig. 2 dargestellt ist. Bei druckloser Hydraulikkammer 72 werden durch die Wirkung der Druckfeder 78 der Hydraulikkolben 74 und mit ihm das linke Polrad 56 in die in Fig. 1 gezeigte Stellung gedrückt, bei der die Magnetpolelemente 52 des linken Polrads 56 in den Einflussbereich der Ankerelemente 44 der linken Phase treten.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Transversalflussantrieb mit wenigstens einem ersten Bauteil (24) und einem zweiten Bauteil (10), die um eine Drehachse (18) relativ zueinander verdrehbar sind und wenigstens eine Phase einer Transversalflussmaschine enthalten, welche in Umfangsrichtung zueinander beabstandete Magnetkreiselemente aufweist, wobei jedes Magnetkreiselement wenigstens ein auf dem ersten Bauteil angeordnetes im wesentlichen U-förmiges Ankerelement (44, 46), welches eine sich in Umfangsrichtung erstreckende Erregerwicklung (48, 50) einschließt, und ein auf dem zweiten Bauteil (10) angeordnetes wenigstens einen Permanentmagneten enthaltendes Magnetpolelement (52, 54) aufweist, **dadurch gekennzeichnet, dass** wenigstens einige der Magnetpolelemente (52, 54) und/oder wenigstens einige der Ankerelemente (44, 46) gemeinsam mit der zugehörigen Erregerwicklung (48, 50) axial verschiebbar auf dem zugehörigen Bauteil (10, 24) angeordnet sind, so dass sich das Magnetfeld in den betroffenen Magnetkreiselementen schwächen lässt.

2. Transversalflussantrieb nach Anspruch 1, **dadurch gekennzeichnet, dass** das erste Bauteil ein sich nicht drehender Stator (24) und das zweite Bauteil ein sich gegenüber dem Stator (24) verdrehbarer Rotor (10) ist.

3. Transversalflussantrieb nach Anspruch 1 oder 2, **dadurch gekennzeichnet, dass** die Magnetpolelemente (52, 54) jeder Phase auf einem Polrad (56, 58) angeordnet sind, welches drehfest mit einem Rotormantel (10) , des Transversalflussantriebs verbunden ist.

4. Transversalflussantrieb nach Anspruch 3, **dadurch gekennzeichnet, dass** wenigstens das Polrad (58) einer ersten Phase axial unverschiebbar an dem Rotormantel befestigt ist und wenigstens das Polrad (56) einer zweiten Phase axial verschiebbar ist.

5. Transversalflussantrieb nach einem der Ansprüche 1 bis 4,
**dadurch gekennzeichnet, dass** die Magnetkreiselemente wenigstens zweier Phasen in Umfangsrichtungen zueinander versetzt sind.

6. Transversalflussantrieb nach einem der Ansprüche 1 bis 5,
**dadurch gekennzeichnet, dass** die in Umfangsrichtung angeordneten Ankerelemente (44, 46) einer Phase durch eine einzige durchgehende Erregerwicklung (48, 50) induktiv gekoppelt sind.

7. Transversalflussantrieb nach einem der Ansprüche 1 bis 6,
**dadurch gekennzeichnet, dass** eine Verschiebevorrichtung vorgesehen ist, die eine Verschiebung der Magnetpolelemente (52, 54) und/oder der Ankerelemente während des Betriebs des Transversalflussantriebs ermöglicht.

8. Transversalflussantrieb nach Anspruch 7, **dadurch gekennzeichnet, dass** eine Steuereinrichtung vorgesehen ist, welche die Drehzahl des Antriebs erfasst und bei Über- oder Unterschreiten wenigstens eines vorgebbaren Drehzahlwertes eine automatische Verschiebung vornimmt.

9. Transversalflussantrieb nach einem der Ansprüche 1 bis 8,
**dadurch gekennzeichnet, dass** eine hydraulische Verschiebevorrichtung vorgesehen ist.

10. Transversalflussantrieb nach einem der Ansprüche 1 bis 9,
**dadurch gekennzeichnet, dass** ein als Statorgehäuse (24) ausgebildetes Bauteil wenigstens eine Hydraulikkammer (72) mit einem darin axial verschiebbaren Hydraulikkolben (74) enthält und dass der Hydraulikkolben (74) mit den verschiebbaren Magnetkreiselementen, insbesondere mit wenigstens einem verschiebbaren Polrad (56), verbunden ist.

11. Transversalflussantrieb nach Anspruch 10, **dadurch gekennzeichnet, dass** der Hydraulikkolben (74) durch die Kraft wenigstens einer Rückstellfeder (78) in seine Ausgangsstellung gedrückt wird, in welcher die magnetischen Kreise der verschiebbaren Elemente geschlossen sind, und durch Hydraulikdruck-Beaufschlagung ganz oder teilweise in eine Ausrückstellung, in der eine Magnetfeldschwächung der Elemente gegeben ist, verschiebbar ist.

12. Verwendung eines Transversalflussantriebs nach einem der Ansprüche 1 bis 11 für eine Radnabe, wobei das sich drehende Bauteil (10) ein Rad antreibt.

13. Verwendung nach Anspruch 12, **dadurch gekennzeichnet, dass** das sich drehende Bauteil als Felgenbett (11) für einen Fahrzeugreifen ausgebildet ist.

14. Verwendung nach Anspruch 12 oder 13, **dadurch gekennzeichnet, dass** das Statorteil (24) mit einer Fahrzeugachse verbunden ist.
